# EUROPEAN PATENT SPECIFICATION

(11) **EP 2 865 279 B1**
(45) Date of publication and mention of the grant of the patent: **28.12.2016**
(21) Application number: 14003524.7
(22) Date of filing: 14.10.2014
(51) Int. Cl.: A23L 2/52, A23L 2/60, A23L 29/262

(54) **Low-calorie beverage composition**
Kalorienarme Getränkezusammensetzung
Composition de boisson hypocalorique

(30) Priority: 17.10.2013 KR 20130124167
(43) Date of publication of application: 29.04.2015
(73) Proprietor: LOTTE Fine Chemical Co., Ltd., Ulsan, 44714 (KR)
(72) Inventor: Lee, Hyun Woo, 404-310 Incheon (KR); Lee, Eun Jung, 137-797 Seoul (KR); Lee, Jae Ho, 463-930 Gyeonggi-do (KR)
(74) Representative: Kador & Partner

(56) References cited:
- CN-A- 101 305 828
- CN-A- 102 178 312
- CN-A- 102 919 933
- US-A1- 2003 069 202
- US-A1- 2010 004 194
- US-B1- 6 180 159

## Description

### RELATED APPLICATION

This application claims the benefit of Korean Patent Application No. 10-2013-0124167, filed on October 17, 2013, in the Korean Intellectual Property Office, the disclosure of which is incorporated herein in its entirety by reference.

### BACKGROUND

### 1. Field

One or more embodiments of the present invention relate to a low-calorie beverage composition, and more particularly, to a low-calorie beverage composition in which a sweetener and cellulose ether are included for obtaining strong sweetness, a low caloric value, low intensity of unpleasant tastes or residual tastes, and improved body-viscosity.

### 2. Description of the Related Art

The sweetness of most sweeteners is about several ten to several hundred times the sweetness of sugar (sucrose), and thus, even in a small amount, sweeteners may effectively have sweetness. Although sweeteners substantially help to reduce calorie intake, they have a problem of generating a metallic taste or other various residual tastes, thus causing customers to avoid drinking sweetener-containing beverages.

Various kinds of artificial or natural sweeteners are currently available in the market. Examples of artificial sweeteners include aspartame and acesulfame potassium, and examples of natural sweeteners include stevioside, enzymatically-modified stevia (glucosyl stevia), and rebaudioside A.

Generally, carbonated drinks contain sugar, fructose, glucose, etc., and have an average caloric value of about 40 kcal/100 ml. Accordingly, people who consume carbonated drinks may consequently take in about 10 wt% sugar solutions, and due to this and the westernized dietary habit of taking in a larger large amount of sugar, people may consume an excessive amount of sugar and may eventually have adult diseases such as obesity or diabetes.

As a result, various kinds of zero-calorie beverages using sweeteners have been favored, and most of such zero-calorie beverages contain sweeteners. However, many consumers know the taste difference between general beverages and zero-calorie beverages and dislike the unpleasant tastes or residual tastes of such beverages. Thus, many consumers are not willing to purchase zero-calorie beverages. In fact, the low-calorie beverage market accounts for about 30% of the entire carbonated drinks market in terms of sales but its growth rate is very sluggish. Therefore, mid-calorie beverages have recently been introduced. Mid-calorie beverages refer to beverages having improved tastes and manufactured using sweeteners together with conventional sugars. An example of the mid-calorie beverages is low-calorie milk.

Various attempts have been made to mask the unpleasant tastes and residual tastes of sweeteners. For example, a method of using cyclodextrin or crystalline fructose to mask the unpleasant tastes or residual tastes of sweeteners has been attempted. However, the method is not applicable to zero-calorie beverages.

KR 2007-0112005 A discloses a method of manufacturing low calorie sugar-free syrup by successively dissolving soluble dietary fiber in water, followed by successively adding gum, natural stabilizers and sweetening agents while stirring is provided to make syrup containing fibrous material in large quantities without sugar and useful for production of foods with the same taste and texture as conventional foods.

A flavored instant or ready-to-drink beverage product is disclosed in US 6,180,159 B1. This product contains a water-insoluble component that includes microparticulate component, a fat/oil component, an emulsifier, and optionally, microcrystalline cellulose; a water-soluble component that includes a soluble beverage component, a thickener; and flavorants.

US2003/0069202 A1 is directed to compositions, kits and methods for promoting defined health benefits. The composition comprises: (a) a first component selected from the group consisting of gelatin, cartilage, aminosugars, glycosaminoglycans, methylsulfonylmethane, precursors of methylsulfonylmethane, S-adenosylmethionine, salts thereof, and mixtures thereof; and (b) a second component comprising: (i) a cation source selected from the group consisting of calcium, potassium, magnesium, and mixtures thereof; and (ii) an edible acid source.

A beverage seedlessness Rosa roxburghii, and Angelica Keiskei as raw material is disclosed in CN 102919933. The beverage is rich in chalcone and vitamins, its mouthfeel is unique, instant and promotes health effects.

CN102178312 is directed to a health beverage of bitter-buckwheat and its preparation method. The beverage comprises buckwheat seeds, sucrose ester, carboxymethylcellulose sodium, xylitol, sodium cyclamate and aspartame.

A beverage based on soybean is disclosed in CN 101305828. The beverage effects the lowering of blood pressure, inhibiting cholesterol and promotoes fat metabolism.

US 2010/0004194 relates to the use of isomaltulose or mixtures thereof for the production of functional food products for improving regeneration of individuals exposed to physical exertion.

### SUMMARY

One or more embodiments of the present invention provide A beverage composition comprising water, a main material, a sweetener having a sweetness of 40 or higher, and cellulose ether, wherein the sweetness of the sweetener is defined as the sweetness of an aqueous solution of the sweetener having the same concentration as that of an aqueous sucrose solution having a predetermined concentration, provided that the sweetness of the aqueous sucrose solution is assumed as 1, wherein the cellulose ether masks unpleasant tastes or residual tastes caused by the sweetener, wherein the content of the main material is in the range of 0.01 parts by weight to 10 parts by weight based on 100 parts by weight of the beverage composition, wherein the content of the sweetener is in the range of 0.01 parts by weight to 0.5 parts by weight based on 100 parts by weight of the beverage composition, wherein the content of the cellulose ether is in the range of 0.01 parts by weight to 2 parts by weight based on 100 parts by weight of the beverage composition, wherein the cellulose ether comprises hydroxypropyl methyl cellulose (HPMC), and wherein the beverage composition has a caloric value of 40 kcal/100 ml or less.

Additional aspects will be set forth in part in the description which follows and, in part, will be apparent from the description, or may be learned by practice of the presented embodiments.

The content of the water may be in the range of 90 parts by weight to 99.97 parts by weight, for example, 97.5 parts by weight to 99.97 parts by weight, based on 100 parts by weight of the beverage composition.

The main material may include carbonic acid, an alcohol, a fruit juice, a milk component, a dietary fiber, a coloring agent, a flavoring agent, citric acid, a coffee component, a vitamin, a soymilk component, a chocolate component, a plant extract, or a combination thereof.

The sweetener may include at least one compound selected from the group consisting of: artificial sweeteners including aspartame, acesulfame potassium, Neohesperidin DC, neotame, saccharin, sucralose, alitame, thaumatin, cyclamate, glycyrrhizin, or a combination thereof; and natural sweeteners including stevioside, enzymatically-modified stevia, rebaudioside A or a combination thereof.

The HPMC may include 4 wt% to 12 wt% of a hydroxypropoxy group and 19 wt% to 30 wt% of a methoxy group, and the HPMC may have a viscosity of 3 cps to 100,000 cps.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. Expressions such as "at least one of," when preceding a list of elements, modify the entire list of elements and do not modify the individual elements of the list.

A beverage composition will now be described in detail according to an embodiment of the present invention.

The beverage composition according to the embodiment of the present invention includes water, a main material, a sweetener having a sweetness of 40 or higher, and cellulose ether. Herein, the term "sweetness of the sweetener" is defined as the sweetness of an aqueous solution of the sweetener having the same concentration as that of an aqueous sucrose solution having a predetermined concentration , provided that the sweetness of the aqueous sucrose solution is assumed as 1. The sweetness of the sweetener is determined by a sensory method in which the sweetener is gradually diluted with water until the sweetener diluted with water tastes as having the same sweetness as an aqueous sucrose solution having the predetermined concentration.

The content of the water is an amount to make the total content of the beverage composition be 100 parts by weight. Specifically, the content of the water may be in the range of 90 parts by weight to 99.97 parts by weight, for example, 97.5 parts by weight to 99.97 parts by weight, based on 100 parts by weight of the beverage composition.

The main material may include carbonic acid, an alcohol, a fruit juice, a milk component, a dietary fiber, a coloring agent, a flavoring agent, citric acid, a coffee component, a vitamin, a soymilk component, a chocolate component, a plant extract, or a combination thereof.

The plant extract may include an unpolished rice extract, a green tea extract, a black tea extract, a pinus sylvestris extract, a malt extract, or a combination thereof.

The milk component may be derived from at least one kind of milk powder selected from the group consisting of whole milk powder, skim milk powder, and sweet whey powder.

The dietary fiber may include at least one selected from the group consisting of fiber sols, chicory dietary fiber, oat dietary fiber, wheat dietary fiber, bean dietary fiber, psyllium husks, barley dietary fiber, sugar cane dietary fiber, gums, and fructooligosaccharides.

The coloring agent may include at least one selected from the group consisting of: tar-containing colorants such as Food Green No. 3, Food Red No. 2, Food Red No. 3, Food Blue No. 1, Food Blue No. 2, Food Yellow No. 4, and Food Yellow No. 5 stated in the Korean Food Additive Codex; and tar-free colorants such as β-carotene, water-soluble annatto, copper sulfates, ferric oxide, caramel, sodium copper chlorophyllin, sodium iron chlorophyllin, and titanium oxides.

The flavoring agent may include at least one selected from the group consisting of fruit flavors, fermented milk flavors, cream flavors, and milk flavors.

The content of the main material is in the range of 0.01 parts by weight to 10 parts by weight based on 100 parts by weight of the beverage composition. If the content of the main material is within the above range, the taste of the main material may be sufficiently felt by consumers, and consumers may easily take in the beverage composition.

The sweetness of the sweetener may be, for example, in the range of 100 to 4,000.

The sweetener may be an artificial sweetener or a natural sweetener.

The artificial sweetener may include aspartame, acesulfame potassium, Neohesperidin DC, neotame, saccharin, sucralose, alitame, thaumatin, cyclamate, glycyrrhizin, or a combination thereof.

The natural sweetener may include stevioside, enzymatically-modified stevia, rebaudioside A, or a combination thereof.

The content of the sweetener is in the range of 0.01 parts by weight to 0.5 parts by weight based on 100 parts by weight of the beverage composition. If the sweetener content is within the above range, the beverage composition may provide sufficient sweetness and may be inexpensive and economical in terms of the sweetener cost.

Hydroxypropyl methyl cellulose (HPMC), masks unpleasant tastes or residual tastes caused by the sweetener.

The HPMC may have a hydroxypropoxy group content in the range of 4 wt% to 12 wt% (e.g., 4 wt% to 7.5 wt%), a methoxy group content in the range of 19 wt% to 30 wt% (e.g., 27 wt% to 30 wt%), and may have a viscosity of 3 cps to 100,000 cps (e.g., 3 cps to 15cps). Herein, "the hydroxypropoxy group content" and "the methoxy group content" each refer to a weight ratio of the substituent to the HPMC. Herein, "the viscosity of HPMC" is a value measured, as stated in articles about medicines in the Korean Pharmacopoeia, by using a Brookfield LV viscometer, and setting the spindle number and number of revolution of a spindle that are suitable for a certain level of viscosity, performing an operation of (i) reading a viscosity value after rotating the spindle for two minutes and (ii) stopping the spindle for two minutes, repeating the operation three times total, and calculating the average of three viscosity values. The viscosity of the HPMC is referred to as the viscosity of a 2 wt% aqueous HPMC solution.

The content of the HPMC is in the range of 0.01 parts by weight to 2 parts by weight based on 100 parts by weight of the beverage composition. If the content of the cellulose ether is within the above range, the inherent taste of the main material may be maintained while unpleasant tastes or residual tastes caused by the sweetener are effectively masked.

The beverage composition has a caloric value of 40 kcal/100 ml or less. For example, the beverage composition may have a caloric value of 0.1 kcal/100 ml to 5 kcal/100 ml.

Hereinafter, the present invention will be described in more detail through examples. However, the present invention is not limited to the examples.

### Examples

### <Examples 1 to 8 and Comparative Examples 1 to 2: Preparation of Beverage Compositions >

### (1) Preparation of aqueous HPMC Solutions

10.0 g of each HPMC shown in Table 1 below was put into a 500 mL beaker. Next, after additionally adding 250 g of 80°C water to the beaker, the contents of the beaker were stirred using a stirrer at 230 rpm for 30 minutes. Then, room-temperature water was added thereto until the weight of the contents of the beaker became 500 g. In this way, a 2 wt% aqueous HPMC solution was prepared. Thereafter, the contents of the beaker were stirred using a stirrer at 230 rpm for 30 minutes and then naturally cooled down.

**[Table 1]**

| | Types of HPMC used |
|---|---|
| Example 1 | HPMC 2910 50 cps (Samsung Fine Chemicals Co., Ltd., AnyAddy^{®} A11) |
| Example 2 | HPMC 2906 50 cps |
| | (Samsung Fine Chemicals Co., Ltd., AnyAddy^{®} B42) |
| Examples 3 & 5 to 7 | HPMC 2208 50 cps (Samsung Fine Chemicals Co., Ltd., AnyAddy^{®} C89) |
| Examples 4 & 8 | HPMC 2208 100 cps (Samsung Fine Chemicals Co., Ltd., AnyAddy^{®} C42) |
| Comparative examples 1 & 2 | No HPMC was added |

### (2) Preparation of Beverage Compositions

Refined sugar, a sweetener (Daepyung Co., Ltd., enzymatically-modified stevia), the aqueous HPMC solutions prepared in Preparation (1), and purified water were mixed at ratios shown in Table 2 and stirred at room temperature (about 25°C) using a stirrer at 300 rpm for 30 minutes. As a result, beverage compositions were obtained. Since the effect of adding the sweetener and cellulose ether could be confirmed without adding a main material, the main material was not added to the beverage compositions.

**[Table 2]**

| Raw Materials | Contents (parts by weight) | | | | | | | | | |
|---|---|---|---|---|---|---|---|---|---|---|
| | Examples | | | | | | | | Comparative Examples | |
| | 1 | 2 | 3 | 4 | 5 | 6 | 7 | 8 | 1 | 2 |
| Refined Sugar | 0 | 0 | 0 | 0 | 0 | 0 | 0 | 0 | 5 | 0 |
| Sweetener | 0.05 | 0.05 | 0.05 | 0.05 | 0.05 | 0.05 | 0.05 | 0.05 | 0 | 0.05 |
| A11 2 wt% aqueous sol. | 7.5 | 0 | 0 | 0 | 0 | 0 | 0 | 0 | 0 | 0 |
| B42 2 wt% aqueous sol. | 0 | 7.5 | 0 | 0 | 0 | 0 | 0 | 0 | 0 | 0 |
| C89 2 wt% aqueous sol. | 0 | 0 | 7.5 | 0 | 15 | 25 | 50 | 0 | 0 | 0 |
| C42 2 wt% aqueous sol. | 0 | 0 | 0 | 7.5 | 0 | 0 | 0 | 15 | 0 | 0 |
| Purified | 92.45 | 92.45 | 92.45 | 92.45 | 84.95 | 74.95 | 49.95 | 84.95 | 95 | 99.95 |
| Water | | | | | | | | | | |
| Total | 100 | 100 | 100 | 100 | 100 | 100 | 100 | 100 | 100 | 100 |

### Evaluation Example

### <Evaluation Example 1: Evaluation of Physical Properties of Beverage Compositions using 5-Point Rating Scale>

The beverage compositions prepared in Examples 1 to 8 and Comparative Examples 1 to 2 were evaluated regarding their unpleasant taste intensity, sweet taste intensity, and body-viscosity as described below. The results are shown in Table 4 below. In this specification, "body-viscosity" refers to weight feeling or texture feeling perceived within the entire mouth.

### (Evaluation Method)

(1) Evaluation Panel: 10 persons (trained personnel for sensory test)
(2) Evaluation Method:

A sensory test for evaluating the unpleasant taste intensity, sweet taste intensity, and body-viscosity of each of the beverage compositions was performed by a method described below. More specifically, the sensory test was performed within 10 minutes after preparing the beverage compositions. In particular, the sensory test was performed based on a 5-point rating scale: i.e., very bad (1 point), bad (2 points), normal (3 points), good (4 points), and very good (5 points).

### <Evaluation Example 2: Evaluation of Caloric Values of Beverage Compositions >

Each of the beverage compositions was examined regarding its caloric value as described below and the results are shown in Table 4 below. Specifically, the caloric value of each of the beverage compositions was calculated using Atwater index. Here, a calorie nutrient generates different amounts of heat between when burning in a calorimeter and when burning in the human body. In a calorimeter, carbohydrates generate a caloric value of 4.1 kcal per 1 g, fats generate a caloric value of 9.45 kcal per 1 g, and proteins generate a caloric value of 5.65 kcal per 1 g. However, when being absorbed in the human body, only 98% of carbohydrates, only 95% of fats, and only 92% of proteins are absorbed therein on average. Therefore, the actual caloric value generated by nutrient intake are 4 kcal per 1 g of carbohydrates, 9 kcal per 1 g of fats, and 4 kcal per 1 g of proteins. Table 3 below shows general nutrient compositions per 100 g of each of the refined Sugar, the sweetener (enzymatically-modified stevia), and the HPMC. The caloric value shown in Table 4 were calculated based on the data shown in Table 3.

**[Table 3]**

| | Refined Sugar | Sweetener | HPMC |
|---|---|---|---|
| Carbohydrates | 100 g | 70.5 g | 100 g |
| Fats | 0 g | 14.2g | 0 g |
| Proteins | 0 g | 2g | 0 g |
| Total | 100 g | 86.7 g | 100 g |

| | | | |
|---|---|---|---|
| ***The sweetener includes 13.3g of non-nutrients per 100 g. | | | |

**[Table 4]**

| | Examples | | | | | | | | Comparative Examples | |
|---|---|---|---|---|---|---|---|---|---|---|
| Physical Properties | 1 | 2 | 3 | 4 | 5 | 6 | 7 | 8 | 1 | 2 |
| Unpleasant Taste Intensity | 3.8 | 4.2 | 3.5 | 3.2 | 3.3 | 2.4 | 2.2 | 2.3 | 1.0 | 5.0 |
| Sweet Taste Intensity | 3.9 | 4.1 | 4.0 | 3.9 | 3.8 | 3.5 | 3.3 | 3.6 | 4.0 | 4.2 |
| Body-viscosity | 3.0 | 3.1 | 2.9 | 3.2 | 3.5 | 3.8 | 4.5 | 3.7 | 3.5 | 1.0 |
| Caloric value (kcal/100mL) | 0.8 | 0.8 | 0.8 | 0.8 | 1.4 | 2.2 | 4.2 | 1.4 | 20 | 0.2 |

Referring to Table 4, the HPMC-containing beverage compositions (containing a sweetener) prepared in Examples 1 to 8 have low degrees of unpleasant taste intensity, almost equivalent degrees of sweetness intensity, and high degrees of body-viscosity as compared to the HPMC-free beverage compositions (containing a sweetener) prepared in Comparative Example 2. The beverage composition (containing refined sugar) prepared in Comparative Example 1 has a low degree of unpleasant taste intensity, a high degree of sweetness intensity, and a high degree of body-viscosity, but has problems such as high production costs and a high caloric value due to a high content of refined sugar.

As described above, according to the embodiment of the present invention, since the beverage composition includes the sweetener and cellulose ether, the beverage composition has a strong sweet taste, a low caloric value, low intensity of unpleasant or residual tastes, and improved body-viscosity, and thus consumers may easily take in the beverage composition.

## Claims

1. A beverage composition comprising water, a main material, a sweetener having a sweetness of 40 or higher, and cellulose ether,
wherein the sweetness of the sweetener is defined as the sweetness of an aqueous solution of the sweetener having the same concentration as that of an aqueous sucrose solution having a predetermined concentration, provided that the sweetness of the aqueous sucrose solution is assumed as 1,
wherein the cellulose ether masks unpleasant tastes or residual tastes caused by the sweetener,
wherein the content of the main material is in the range of 0.01 parts by weight to 10 parts by weight based on 100 parts by weight of the beverage composition,
wherein the content of the sweetener is in the range of 0.01 parts by weight to 0.5 parts by weight based on 100 parts by weight of the beverage composition,
wherein the content of the cellulose ether is in the range of 0.01 parts by weight to 2 parts by weight based on 100 parts by weight of the beverage composition,
wherein the cellulose ether comprises hydroxypropyl methyl cellulose (HPMC), and
wherein the beverage composition has a caloric value of 40 kcal/100 ml or less.

2. The beverage composition of claim 1, wherein the main material comprises carbonic acid, an alcohol, a fruit juice, a milk component, a dietary fiber, a coloring agent, a flavoring agent, citric acid, a coffee component, a vitamin, a soymilk component, a chocolate component, a plant extract, or a combination thereof.

3. The beverage composition of claim 1, wherein the sweetener comprises at least one compound selected from the group consisting of: artificial sweeteners comprising aspartame, acesulfame potassium, Neohesperidin DC, neotame, saccharin, sucralose, alitame, thaumatin, cyclamate, glycyrrhizin, or a combination thereof; and natural sweeteners comprising stevioside, enzymatically-modified stevia, rebaudioside A, or a combination thereof.

4. The beverage composition of claim 1, wherein the HPMC comprises 4 wt% to 12 wt% of a hydroxypropoxy group and 19 wt% to 30 wt% of a methoxy group and has a viscosity of 3 cps to 100,000 cps.

## Patentansprüche

1. Getränkezusammensetzung, die Wasser, ein Hauptmaterial, ein Süßungsmittel, das eine Süße von 40 oder höher aufweist, und einen Celluloseether umfasst,
wobei die Süße des Süßungsmittel als die Süße von einer wässrigen Lösung des Süßungsmittel definiert ist, die dieselbe Konzentration wie eine wässrige Saccharoselösung hat, die eine vorbestimmte Konzentration aufweist, unter der Voraussetzung, dass die Süße der wässrigen Saccharoselösung als 1 angenommen wird,
wobei der Celluloseether unangenehme Geschmäcker oder Restgeschmäcker, die durch das Süßungsmittel hervorgerufen werden, maskiert,
wobei der Gehalt des Hauptmaterials in dem Bereich von 0,01 Gewichtsanteilen bis 10 Gewichtsanteilen, basierend auf 100 Gewichtsanteilen der Getränkezusammensetzung, liegt,
wobei der Gehalt des Süßungsmittels in dem Bereich von 0,01 Gewichtsanteilen bis 0,5 Gewichtsanteilen, basierend auf 100 Gewichtsanteilen der Getränkezusammensetzung, liegt,
wobei der Gehalt des Celluloseethers in dem Bereich von 0,01 Gewichtsanteilen bis 2 Gewichtsanteilen, basierend auf 100 Gewichtsanteilen der Getränkezusammensetzung, liegt,
wobei der Celluloseether Hydroxypropylmethylcellulose (HPMC) umfasst, und
wobei die Getränkezusammensetzung einen Brennwert von 40 kcal/100 ml oder weniger hat.

2. Getränkezusammensetzung nach Anspruch 1, wobei das Hauptmaterial Carbonsäure, einen Alkohol, einen Fruchtsaft, eine Milchkomponente, einen Ballaststoff, einen Farbstoff, einen Geschmacksstoff, Zitronensäure, eine Kaffeekomponente, ein Vitamin, eine Sojamilchkomponente, eine Schokoladenkomponente, einen Pflanzenextrakt oder eine Kombination daraus umfasst.

3. Getränkezusammensetzung nach Anspruch 1, wobei das Süßungsmittel mindestens eine Verbindung umfasst, die aus der Gruppe ausgewählt ist, bestehend aus: künstlichen Süßstoffen, umfassend Aspartam, Acesulfam-Kalium, Neohesperidin DC, Neotam, Saccharin, Sucralose, Alitam, Thaumatin, Cyclamat, Glycyrrhizin oder eine Kombination daraus; und natürlichen Süßstoffen, umfassend Steviosid, enzymatische modifiziertes Stevia, Rebaudiosid A oder eine Kombination daraus.

4. Getränkezusammensetzung nach Anspruch 1, wobei die HPMC 4 Gew.-% bis 12 Gew.-% von einer Hydroxypropoxygruppe und 19 Gew.-% bis 30 Gew.-% von einer Methoxygruppe umfasst und eine Viskosität von 3 cps bis 100.000 cps aufweist.

## Revendications

1. Composition de boisson comprenant de l'eau, un matériau principal, un édulcorant ayant un pouvoir édulcorant de 40 ou plus, et un éther de cellulose,
dans laquelle le pouvoir édulcorant de l'édulcorant est défini comme étant le pouvoir édulcorant d'une solution aqueuse de l'édulcorant ayant la même concentration que celle d'une solution aqueuse de saccharose ayant une concentration prédéterminée, à condition que le pouvoir édulcorant de la solution aqueuse de saccharose soit supposé comme étant de 1,
dans laquelle l'éther de cellulose masque des goûts déplaisants ou des goûts résiduels causés par l'édulcorant,
dans laquelle la teneur du matériau principal est dans la plage de 0,01 partie en poids à 10 parties en poids sur la base de 100 parties en poids de la composition de boisson,
dans laquelle la teneur de l'édulcorant est dans la plage de 0,01 partie en poids à 0,5 partie en poids sur la base de 100 parties en poids de la composition de boisson,
dans laquelle la teneur de l'éther de cellulose est dans la plage de 0,01 partie en poids à 2 parties en poids sur la base de 100 parties en poids de la composition de boisson,
dans laquelle l'éther de cellulose comprend de l'hydroxypropylméthylcellulose (HPMC), et
dans laquelle la composition de boisson a une valeur calorique de 40 kcal/100 ml ou moins.

2. Composition de boisson de la revendication 1, dans laquelle le matériau principal comprend de l'acide carbonique, un alcool, un jus de fruit, un composant de lait, une fibre alimentaire, un agent colorant, un agent aromatisant, de l'acide citrique, un composant de café, une vitamine, un composant de lait de soja, un composant de chocolat, un extrait de plante, ou une combinaison de celui-ci.

3. Composition de boisson de la revendication 1, dans laquelle l'édulcorant comprend au moins un composé choisi dans le groupe constitué de : édulcorants artificiels comprenant l'aspartame, l'acésulfame de potassium, la néohespéridine DC, le néotame, la saccharine, le sucralose, l'alitame, la thaumatine, le cyclamate, la glyçyrrhizine, ou une combinaison de ceux-ci ; et des édulcorants naturels comprenant le stévioside, Stevia modifié de façon enzymatique, le rebaudioside A, ou une combinaison de ceux-ci.

4. Composition de boisson de la revendication 1, dans laquelle le HPMC comprend 4 % en poids à 12 % en poids d'un groupe hydroxypropoxy et 19 % en poids à 30 % en poids d'un groupe méthoxy et a une viscosité de 3 cps à 100 000 cps.
